# FASCICULE DE BREVET EUROPEEN

(11) **EP 2 859 641 B1**
(45) Date de publication et mention de la délivrance du brevet: **27.01.2021**
(21) Numéro de dépôt: 13734463.6
(22) Date de dépôt: 07.06.2013
(51) Int. Cl.: H02J 7/00, H02J 7/02, B60L 53/22, B60L 53/20, B60L 53/62

(54) **DISPOSITIF DE CHARGE À ENTRÉE ADAPTATIVE ET MÉTHODE DE CHARGEMENT**
LADEVORRICHTUNG MIT ADAPTATIVEM EINGANG UND LADEVERFAHREN
CHARGING DEVICE WITH ADAPTATIVE INPUT AND CHARGING METHOD

(30) Priorité: 07.06.2012 FR 1201646
(43) Date de publication de la demande: 15.04.2015
(73) Titulaire: Intelligent Electronic Systems, 34130 Saint-Aunes (FR)
(72) Inventeur: BIAGINI, Eric, 34470 Perols (FR)
(74) Mandataire: Bandpay & Greuter
(86) Numéro de dépôt international: PCT/FR2013/051312
(87) Numéro de publication internationale: WO 2013/182825

(56) Documents cités:
- WO-A2-2012/066438
- CN-U- 201 594 757
- CN-U- 202 142 879
- FR-A1- 2 946 473
- SU ET AL: "Current source inverter based traction drive for EV battery charging applications", 2011 IEEE VEHICLE POWER AND PROPULSION CONFERENCE, 12339364, 2011, pages 1st-6th, XP002692761, Pistacaway, NJ, USA DOI: 10.1109/vppc.2011.6043143 ISBN: 978-1-61284-248-6

## Description

### DOMAINE DE L'INVENTION

La présente invention concerne un dispositif de charge comprenant un convertisseur AC-DC isolé, ce dispositif de charge étant particulièrement approprié pour une utilisation en tant que dispositif embarqué dans un véhicule automobile électrique, voire en tant que dispositif externe au véhicule automobile électrique (amovible).

### ARRIERE-PLAN TECHNIQUE

De nombreux engins mobiles utilisent l'énergie électrique et sont équipés de batteries, par exemple des véhicules électriques, des nacelles, des transpalettes... Ces engins comprennent généralement des chargeurs embarqués, c'est-à-dire des chargeurs de batteries électriques qui sont montés directement sur les engins mobiles. Ils peuvent également être utilisés avec un dispositif chargeur de batterie externe.

La fonction principale de ces chargeurs est la recharge des batteries à partir de l'électricité disponible sur le réseau de distribution électrique. Ils assurent donc une conversion d'un courant alternatif en courant continu.

Les critères recherchés pour les chargeurs, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

Afin de mettre en oeuvre la fonction de conversion AC-DC avec isolation galvanique, il est connu d'utiliser une structure à deux convertisseurs :
- Un premier convertisseur AC-DC appelé pré-régulateur, qui comporte un circuit correcteur de facteur de puissance afin de limiter les harmoniques de courant d'entrée.
- Un deuxième convertisseur DC-DC pour assurer la régulation de la charge. Ce convertisseur DC-DC assure également la fonction d'isolation galvanique pour la sécurité d'utilisation.

Il existe deux catégories de chargeurs embarqués : la catégorie la plus répandue est celle des chargeurs embarqués à entrée monophasée. La grande majorité des installations électriques disponibles étant monophasées, ces chargeurs peuvent être connectés facilement à un grand nombre de points de raccordement disponibles. En revanche, la puissance de charge disponible est limitée du fait de la limitation de la tension et de l'intensité du courant d'entrée.

La deuxième catégorie est celle des chargeurs à entrée triphasée, qui présentent une puissance de charge supérieure. En revanche, les installations électriques triphasées étant rares, notamment chez les particuliers, ces chargeurs ne peuvent fonctionner que dans des installations électriques spécialement dédiées.

Le document Current Source Inverter Based Traction Drive for EV Battery Charging Applications, de Su et al., dans 2011 IEEE Vehicle Power and Propulsion Conference, décrit un dispositif d'alimentation électrique pour véhicule électrique ou hybride. Ce dispositif assure une première conversion d'un courant alternatif en un courant intermédiaire continu, puis une deuxième conversion du courant intermédiaire continu en un courant final également continu alimentant une batterie. Il est précisé que le courant alternatif peut être monophasé ou qu'il peut être triphasé.

FR2946273 A1, ainsi que CN202114287U, montrent un dispositif de charge de batterie permettant de recharger une batterie à partir d'un réseau monophasé ou un réseau triphasé.

Il existe donc un besoin de disposer d'un dispositif de charge pour l'alimentation des batteries d'appareils motorisés (et notamment de véhicules automobiles électriques), qui puisse être connecté au plus grand nombre de systèmes de raccordement au réseau électrique et qui soit susceptible d'effectuer la charge de batteries à une puissance élevée, lorsque celle-ci est disponible.

### RESUME DE L'INVENTION

L'invention concerne un dispositif de charge selon la revendication 1 et un procédé de charge selon la revendication 9. Des modes de réalisation de l'invention sont définis dans les revendications dépendantes.

La présente invention permet de surmonter les inconvénients de l'état de la technique. Elle fournit plus particulièrement un dispositif de charge pour appareil motorisé (et notamment pour véhicule) qui peut être connecté à essentiellement tout système de raccordement au réseau électrique, et qui est susceptible d'effectuer la charge de batteries à une puissance élevée, lorsque celle-ci est disponible.

Ceci est accompli en prévoyant un premier convertisseur AC-DC susceptible de fonctionner, dans une première configuration, avec un courant d'entrée monophasé et, dans une deuxième configuration, avec un courant d'entrée multiphasé ; et en ajoutant un module de commutation susceptible de commuter le convertisseur dans la première configuration ou dans la deuxième configuration.

En d'autres termes, le dispositif de charge selon l'invention présente une entrée universelle, et il peut être connecté aux sources d'alimentation multiphasées comme monophasées.

### BREVE DESCRIPTION DES FIGURES

La **figure 1** représente de manière schématique un dispositif de charge selon un mode de réalisation de l'invention.
La **figure 2** représente de manière schématique un détail d'un dispositif de charge selon un mode de réalisation de l'invention.
La **figure 3** représente également de manière schématique un détail d'un dispositif de charge selon un autre mode de réalisation de l'invention.
La **figure** 4 représente de manière schématique un circuit électrique utilisé dans un mode de réalisation de l'invention.

### DESCRIPTION DE MODES DE REALISATION DE L'INVENTION

L'invention est maintenant décrite plus en détail et de façon non limitative dans la description qui suit.

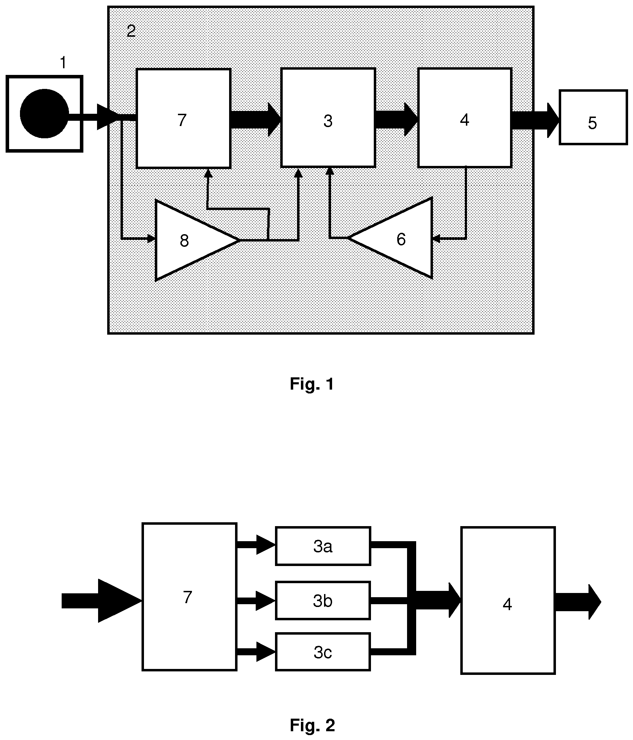

En faisant référence à la **figure 1**, un dispositif de charge 2 est destiné à la charge d'une batterie 5 d'appareil motorisé. Ce dispositif peut soit être intégré dans l'appareil motorisé, soit dans un système de charge externe à l'appareil motorisé, ou bien être autonome. La batterie 5 est adaptée à être chargée par (à délivrer) un courant continu dit courant de sortie.

Selon un mode de réalisation préféré, l'appareil motorisé est un véhicule, notamment un véhicule automobile, à alimentation électrique. Dans d'autres modes de réalisation, l'appareil motorisé peut être un engin de manutention tel qu'un chariot élévateur, une nacelle élévatrice, ou un transpalette.

La batterie 5 représente la batterie de traction du véhicule (ou de l'engin), c'est-à-dire la batterie responsable de l'alimentation du moteur du véhicule (ou de l'engin). Il est entendu que cette batterie 5 peut représenter une batterie unique ou un ensemble de batteries.

La tension du courant de sortie (tension de sortie) vaut en général de 20 à 550 V, de préférence de 24 à 500 V.

Lors de la charge de la batterie 5, la tension de sortie peut varier par exemple entre des valeurs extrémales de 300 V et 500 V.

Le dispositif de charge 2 comprend un premier module de conversion 3 et un deuxième module de conversion 4.

Le premier module de conversion 3 est adapté à convertir un courant d'alimentation alternatif (courant d'entrée) en au moins un courant continu dit intermédiaire. En mode de charge, une source d'alimentation 1 (telle que le réseau électrique) alimente en courant alternatif le premier module de conversion 3.

Le courant d'entrée peut être soit monophasé, par exemple avec une tension de 85 à 265 V, soit multiphasé. Il peut être en particulier biphasé, par exemple avec une tension de 200 à 250 V, ou triphasé, par exemple avec une tension de 380 à 420 V.

Un courant multiphasé est constitué de plusieurs courants alternatifs (de préférence sinusoïdaux) de même fréquence et même amplitude qui sont déphasés entre eux.

Le dispositif de charge 2 de l'invention est susceptible de s'adapter à la fois à un courant d'entrée monophasé, et à un courant d'entrée multiphasé. De préférence, il est susceptible de s'adapter à la fois à un courant d'entrée monophasé, et à un courant d'entrée triphasé ; ou bien il est susceptible de s'adapter à la fois à un courant d'entrée monophasé, et à un courant d'entrée biphasé ; ou bien encore, il est susceptible de s'adapter à la fois à un courant d'entrée monophasé, à un courant d'entrée biphasé, et à un courant d'entrée triphasé. Dans la suite, on prend pour exemple un dispositif de charge 2 susceptible de s'adapter à la fois à un courant d'entrée monophasé, et à un courant d'entrée triphasé - les autres configurations se déduisant de cet exemple par analogie.

Le premier module de conversion 3 alimente en courant continu (appelé courant intermédiaire) le deuxième module de conversion 4.

Le deuxième module de conversion 4 est adapté à convertir le courant intermédiaire en le courant de sortie qui alimente la batterie.

Le premier module de conversion 3 comporte de préférence un circuit correcteur de puissance (PFC), afin de limiter les harmoniques de courant d'entrée. Un tel circuit présente également l'avantage de fonctionner sur une large plage de tensions d'entrée.

Un module de commutation 7 est prévu en entrée du premier module de conversion 3, afin que le dispositif de charge 2 puisse fonctionner avec des courants d'entrée de nature différente. Le module de commutation 7 est adapté à commuter le premier module de conversion 3 entre une première configuration adaptée à un courant alternatif d'entrée monophasé, et une deuxième configuration adaptée à un courant alternatif d'entrée triphasé.

Le module de commutation comporte généralement un ensemble de commutateurs, par exemple des relais bidirectionnels et / ou des relais électromécaniques.

Selon un mode de réalisation, le module de commutation 7 peut être commandé directement par l'opérateur, qui choisit la première configuration ou la deuxième configuration du premier module de conversion 3. Toutefois, il est préféré que la commutation soit effectuée automatiquement. Pour ce faire, on prévoit des moyens de contrôle 8 adaptés à détecter la nature monophasée ou triphasée du courant alternatif d'entrée, et à commander le dispositif de commutation 7, pour commuter (c'est-à-dire faire basculer ou conserver) le premier module 3 dans la première configuration si un courant alternatif d'entrée monophasé a été détecté, et pour commuter (c'est-à-dire faire basculer ou conserver) le premier module 3 dans la deuxième configuration si un courant alternatif d'entrée triphasé a été détecté.

Les moyens de contrôle 8 peuvent comporter des éléments analogiques et / ou des éléments numériques. Ils peuvent comprendre un microcontrôleur. Ils sont paramétrables, afin de s'adapter facilement à des réseaux de distribution électrique associés à des contraintes normatives variées.

En faisant référence à la **figure 2****,** une possibilité pour la mise en oeuvre du dispositif de charge 2 consiste à prévoir trois unités de conversion du premier module 3a, 3b, 3c, constituant ensemble le premier module de conversion 3, chaque unité de conversion du premier module 3a, 3b, 3c étant adaptée à convertir un courant alternatif monophasé en un courant continu. Par exemple, chacune de ces unités 3a, 3b, 3c peut comporter un circuit PFC monophasé.

Dans la première configuration (fonctionnement avec une alimentation monophasée), le module de commutation 7 dirige le courant d'entrée monophasé vers l'une des unités 3a, 3b, 3c, ou encore il répartit le courant d'entrée monophasé, vers deux unités, ou de préférence vers les trois unités 3a, 3b, 3c, de préférence.

Dans la deuxième configuration (fonctionnement avec une alimentation triphasée), le module de commutation 7 sépare le courant alternatif d'entrée triphasé en trois courants alternatifs monophasés individuels, et dirige chacun de ces courants alternatifs monophasés individuels vers les unités de conversion du premier module 3a, 3b, 3c respectives.

Dans l'une et l'autre configurations, chaque unité de conversion du premier module 3a, 3b, 3c convertit le courant alternatif monophasé qui l'alimente en un courant intermédiaire individuel, continu. Puis les trois courants intermédiaires individuels sont sommés par des moyens de sommation, pour fournir un courant intermédiaire total, continu, qui alimente le deuxième module de conversion 4, qui est dans ce cas un convertisseur DC-DC unique.

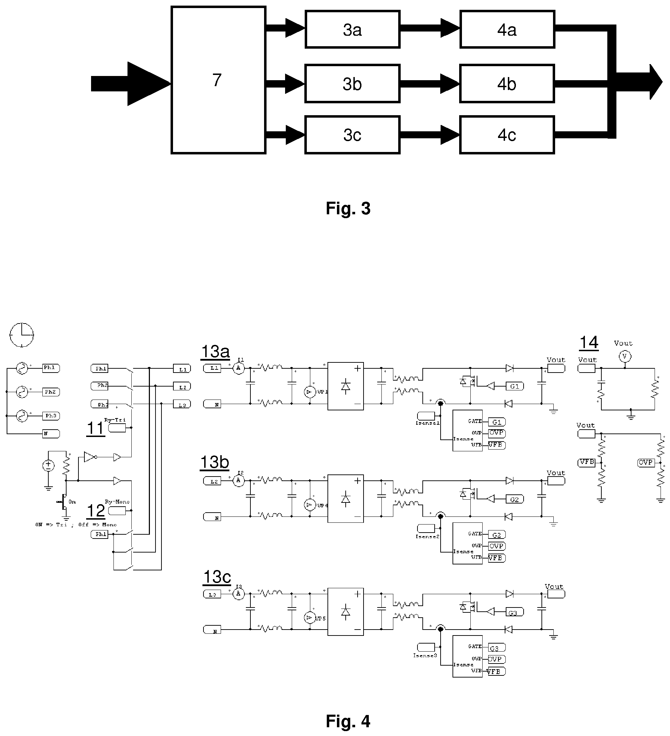

Le circuit représenté à la **figure 4** constitue un exemple de mise en œuvre possible de ce mode de réalisation.

Ce circuit comprend un relai présentant une position triphasée 11 et une position monophasée 12, ainsi que trois circuits PFC monophasés 13a, 13b, 13c. Lorsque le relai est en position triphasée 11, chaque phase du courant d'entrée triphasé alimente un circuit PFC monophasé respectif 13a, 13b, 13c. Lorsque le relai est en position monophasée 12, les trois circuits PFC monophasés 13a, 13b, 13c sont alimentés en parallèle par le courant d'entrée monophasé.

Les trois circuits PFC monophasés 13a, 13b, 13c sont connectés à une sortie commune 14 pour fournir le courant intermédiaire continu vers le deuxième module de conversion 4.

La **figure 3** représente un autre mode de réalisation, alternatif à celui de la **figure 2****.** Dans ce mode de réalisation, le deuxième module de conversion 4 comprend trois unités de conversion du deuxième module 4a, 4b, 4c, qui constituent chacune un convertisseur DC-DC individuel. Chaque unité de conversion du premier module 3a, 3b, 3c alimente séparément en courant intermédiaire individuel une unité de conversion du deuxième module 4a, 4b, 4c respective.

Chaque unité de conversion du deuxième module 4a, 4b, 4c fournit un courant de sortie individuel, et les courants de sortie individuels sont sommés par des moyens de sommation pour fournir le courant de sortie (total).

Selon un autre mode de réalisation non représenté, le premier module de conversion 3 comporte un unique convertisseur triphasé qui est également utilisable avec un courant d'entrée monophasé, par exemple un pont de Vienna.

Les moyens de contrôle 8, en plus de la détection de la nature monophasée ou triphasée du courant alternatif d'entrée, et de la commande correspondante du dispositif de commutation 7, peuvent également être adaptés à ajuster un ou plusieurs paramètres de fonctionnement du premier module de conversion 3, en fonction de paramètres du courant alternatif d'entrée détectés et / ou d'informations extérieures reçues.

Ainsi, ils peuvent ajuster une valeur d'intensité maximale du courant intermédiaire et / ou une valeur de tension maximale du courant intermédiaire (ou des courants intermédiaires individuels le cas échéant).

Les paramètres du courant alternatif d'entrée détectés peuvent être par exemple une valeur de tension, une valeur d'intensité, une valeur de puissance et / ou une valeur de fréquence du courant d'entrée.

Cela permet une adaptation automatique du dispositif de charge 2 en fonction du courant d'entrée, ce qui est particulièrement avantageux du point de vue de la sécurité. En effet, le dispositif est susceptible d'être connecté à des sources d'énergie présentant une puissance plus ou moins élevée, et il est donc utile de limiter la puissance de travail en conséquence.

Les moyens de contrôle 8 peuvent aussi agir sur le premier module de conversion 3 en fonction d'informations reçues par une ou plusieurs autres voies, par exemple un signal électrique reçu par un fil pilote, ou un signal radio sans fil (signal transmis par rayonnement électromagnétique, par exemple selon le protocole Wi-Fi ou dans le cadre d'une communication par satellite), ou encore un signal de courant porteur transmis avec le courant alternatif d'entrée lui-même.

Cela permet une régulation externe du dispositif selon l'invention, par exemple pour ajuster la puissance de charge afin de garantir des conditions de sécurité optimales.

Cela permet également de disposer d'un dispositif de charge 2 capable non seulement de fonctionner aussi bien avec un courant monophasé qu'avec un courant triphasé, mais également de fonctionner avec divers courants possibles dans chacune de ces catégories, par exemple de tension, intensité, puissance ou fréquence plus ou moins élevées, le dispositif étant ainsi totalement polyvalent.

Par exemple, en fonction des valeurs de tension d'entrée mesurées, de leur nombre, le dispositif limite l'intensité de son (ses) courants d'entrée à une valeur par défaut, cette valeur étant fixée selon les normes de sécurité applicables en fonction de la nature de la tension d'entrée. En cas de disponibilité d'une consigne de courant maximal provenant de la source d'alimentation du dispositif de charge (cas d'un dispositif intégrant la fonction « fil pilote » ou « consigne par courant porteur »), alors le courant maximal est celui indiqué par la consigne.

Le dispositif de charge est alors universel, puisque capable de s'adapter en toute sécurité à des sources d'alimentation monophasées ou multiphasées et capable d'adapter le courant maximal d'entrée en fonction du nombre de phases, de la valeur des tensions d'entrée et de la présence éventuelle d'une consigne externe.

Le deuxième module de conversion 4 (ou le cas échéant chaque unité de conversion du deuxième module 4a, 4b, 4c) est de préférence un module de conversion avec isolation galvanique et notamment un module de conversion à découpage avec isolation galvanique, c'est-à-dire qu'il comporte : un sous-module de découpage convertissant le courant continu intermédiaire en courant alternatif dont la fréquence est appelée fréquence de découpage ; un sous-module de transformation, recevant ledit courant alternatif, comprenant un couplage magnétique de deux circuits et assurant l'isolation galvanique ; et un sous-module de redressement convertissant le courant alternatif issu du sous-module de transformation en le courant continu de sortie.

Le deuxième module de conversion 4 peut être par exemple un convertisseur à modulation de déphasage (« phase shift ») ou à transfert direct à modulation de rapport cyclique (« forward », « push pull », « hacheur série »,...) ou un convertisseur résonant (notamment de type LC ou LLC).

Pour chaque deuxième module de conversion 4 donné, on peut définir des conditions de fonctionnement optimales.

L'invention prévoit donc, selon un mode de réalisation, un asservissement sous la forme de moyens de contrôle supplémentaires 6 du premier module de conversion 3, adaptés à ajuster la tension du ou des courants intermédiaires selon l'évolution de la charge de la batterie 5, de sorte que le deuxième module de conversion 4 fonctionne dans les conditions optimales prédéfinies pratiquement tout au long de la charge.

Cet asservissement peut se faire de plusieurs façons, soit selon une loi de variation établie en fonction des conditions de tension et courant mesurées, soit à partir de la mesure et du contrôle direct du fonctionnement du convertisseur 4.

Plus précisément, en cas de variation de la tension et / ou de la puissance du courant de sortie du fait de la charge (batterie 5), un asservissement permet de modifier soit la fréquence, soit le rapport cyclique de découpage (soit les deux), du deuxième module de conversion 4 afin d'adapter la conversion DC-DC aux nouvelles conditions imposées par la charge.

Cet asservissement a tendance à éloigner le deuxième module de conversion 4 de ses conditions de fonctionnement optimales. Un deuxième asservissement sur le premier module de conversion 3 permet de modifier la valeur de la tension du ou des courants intermédiaires. La fréquence de découpage et/ou le rapport cyclique peuvent ainsi être ramenés à une valeur de consigne, de sorte que le deuxième module de conversion 4 retrouve ses conditions de fonctionnement optimales prédéfinies.

Une description plus détaillée des moyens de contrôle supplémentaires 6 possibles figure dans la demande de brevet n° FR 12/00728 déposée le 9 mars 2012, et publiée le 13 septembre 2013 sous le numéro FR2987953. Le contenu de ce document. Ce document ne fait toutefois pas partie de l'état de la technique au sens de l'article 54(2) CBE.

## Revendications

1. Dispositif de charge (2) pour une batterie (5) d'un appareil motorisé, adapté à être alimenté par un courant alternatif d'entrée monophasé, et adapté à être alimenté par un courant alternatif d'entrée multiphasé, ledit dispositif de charge (2) comprenant :
- un premier module de conversion (3) ;
- un deuxième module de conversion (4) ;
le premier module de conversion (3) étant adapté à convertir un courant alternatif en au moins un courant intermédiaire continu et à alimenter le deuxième module de conversion (4) avec ledit courant intermédiaire ;
le deuxième module de conversion (4) étant adapté à convertir le courant intermédiaire en un courant de sortie continu, et à alimenter la batterie (5) avec ledit courant de sortie ;
le dispositif de charge (2) comprenant en outre :
- un module de commutation (7) adapté à commuter le premier module de conversion (3) entre une première configuration adaptée à un courant alternatif d'entrée monophasé et une deuxième configuration adaptée à un courant alternatif d'entrée multiphasé ;
dans lequel le premier module de conversion (3) comprend une pluralité d'unités de conversion du premier module (3a, 3b, 3c), chaque unité de conversion du premier module (3a, 3b, 3c) étant adaptée à convertir un courant alternatif monophasé en un courant continu, et le module de commutation (7) étant adapté, dans la deuxième configuration, à séparer le courant alternatif d'entrée multiphasé en courants alternatifs monophasés, et à alimenter les unités de conversion du premier module (3a, 3b, 3c) avec ces courants alternatifs monophasés respectifs.

2. Dispositif selon la revendication 1, dans lequel le courant alternatif multiphasé est un courant alternatif triphasé.

3. Dispositif selon la revendication 1 ou 2, comprenant des moyens de contrôle (8) adaptés à détecter la nature monophasée ou multiphasée du courant alternatif d'entrée, et à commander le dispositif de commutation (7).

4. Dispositif selon la revendication 3, dans lequel les moyens de contrôle (8) sont adaptés :
- à détecter un ou plusieurs paramètres du courant alternatif d'entrée, de préférence choisis parmi une valeur de tension, une valeur d'intensité, une valeur de puissance, une valeur de fréquence, et une combinaison de ceux-ci ; et / ou
- à recevoir une ou plusieurs informations extérieures, de préférence choisies parmi un signal radio, un signal de courant porteur, un signal électrique reçu par une ligne conductrice dédiée, et une combinaison de ceux-ci ; et
- à ajuster un ou plusieurs paramètres de fonctionnement du premier module de conversion (3), de préférence choisis parmi une valeur d'intensité maximale du courant intermédiaire et une valeur de tension maximale du courant intermédiaire, en fonction des paramètres du courant alternatif d'entrée détectés et / ou des informations extérieures reçues.

5. Dispositif selon l'une des revendications 1 à 4, comprenant des moyens de contrôle supplémentaires (6) du premier module de conversion (3) adaptés à ajuster la tension du courant intermédiaire en fonction de paramètres de fonctionnement du deuxième module de conversion (4), de préférence choisis parmi la tension et / ou la puissance et / ou l'intensité du courant de sortie.

6. Dispositif selon l'une des revendications 1 à 5, dans lequel le premier module de conversion (3) comporte au moins un circuit correcteur de facteur de puissance.

7. Dispositif selon l'une des revendications 1 à 6, dans lequel chacune des unités de conversion du premier module (3a, 3b, 3c) est adaptée à fournir un courant intermédiaire individuel, et dans lequel :
- des moyens de sommation sont adaptés à sommer les courants intermédiaires individuels pour fournir un courant intermédiaire total alimentant le deuxième module de conversion (4) ; ou
- le deuxième module de conversion (4) comprend des unités de conversion du deuxième module (4a, 4b, 4c), chacune étant alimentée par un courant intermédiaire individuel issu de l'une des unités de conversion du premier module respectives (3a, 3b, 3c).

8. Dispositif selon l'une des revendications 1 à 7, adapté à être monté sur l'appareil motorisé ; ou adapté à être connecté à l'appareil motorisé à l'extérieur de celui-ci ; l'appareil motorisé étant de préférence un véhicule, et plus particulièrement un véhicule automobile à alimentation électrique.

9. Procédé de charge d'une batterie d'un appareil motorisé, comprenant :
- la fourniture d'un courant alternatif d'entrée monophasé ou multiphasé ;
- la commutation d'un premier module de conversion dans une première configuration adaptée à un courant alternatif monophasé ou dans une deuxième configuration adaptée à un courant alternatif multiphasé ;
- la conversion du courant alternatif d'entrée en au moins un courant intermédiaire continu, dans le premier module de conversion ;
- la conversion du courant intermédiaire en un courant de sortie continu dans un deuxième module de conversion ;
- l'alimentation de la batterie par le courant de sortie ;
dans lequel, lorsque le premier module de conversion est dans la deuxième configuration, le courant alternatif d'entrée multiphasé est séparé en des courants alternatifs monophasés, et chaque courant alternatif monophasé est converti en un courant intermédiaire individuel continu.

10. Procédé selon la revendication 9, dans lequel le courant alternatif multiphasé est un courant alternatif triphasé ; et/ou l'appareil motorisé est un véhicule, de préférence un véhicule automobile à alimentation électrique.

11. Procédé selon la revendication 9 ou 10, comprenant la détection de la nature monophasée ou multiphasée du courant alternatif d'entrée et la commutation du premier module de conversion étant effectuée en fonction de la nature détectée du courant alternatif d'entrée.

12. Procédé selon l'une des revendications 9 à 11, comprenant :
- la détection d'un ou plusieurs paramètres du courant alternatif d'entrée, de préférence choisis parmi une valeur de tension, une valeur d'intensité, une valeur de puissance, une valeur de fréquence, et une combinaison de ceux-ci ; et / ou
- la réception d'une ou plusieurs informations extérieures, de préférence choisies parmi un signal de rayonnement électromagnétique, un signal de courant porteur, un signal électrique reçu par une ligne conductrice dédiée, et une combinaison de ceux-ci ; et
- l'ajustement d'un ou plusieurs paramètres de la conversion du courant alternatif d'entrée en courant intermédiaire, de préférence choisis parmi une valeur d'intensité maximale du courant intermédiaire et une valeur de tension maximale du courant intermédiaire, en fonction des paramètres du courant alternatif d'entrée détectés et / ou des informations extérieures reçues.

13. Procédé selon l'une des revendications 9 à 12, comprenant l'ajustement de la tension du courant intermédiaire en fonction de paramètres du courant de sortie, de préférence choisis parmi la tension et / ou la puissance et / ou l'intensité du courant de sortie.

14. Procédé selon l'une des revendications 9 à 13, dans lequel les courants intermédiaires individuels sont additionnés en un courant intermédiaire total, le courant intermédiaire total étant converti en le courant de sortie, ou bien chaque courant intermédiaire individuel est converti en un courant de sortie individuel continu, les courants de sortie individuels étant additionnés en un courant de sortie total.

15. Appareil motorisé comprenant le dispositif de charge (2) selon l'une des revendications 1 à 8, ainsi que la batterie (5), l'appareil motorisé étant de préférence un véhicule, et de manière plus particulièrement préférée un véhicule automobile à alimentation électrique.

## Patentansprüche

1. Ladevorrichtung (2) für eine Batterie (5) eines motorisierten Apparats, die geeignet ist, von einem einphasigen Eingangswechselstrom versorgt zu werden und geeignet ist, von einem mehrphasigen Eingangswechselstrom versorgt zu werden, wobei die Ladevorrichtung (2) umfasst:
- ein erstes Umwandlungsmodul (3);
- ein zweites Umwandlungsmodul (4);
wobei das erste Umwandlungsmodul (3) geeignet ist, einen Wechselstrom in mindestens einen Zwischen-Gleichstrom umzuwandeln und das zweite Umwandlungsmodul (4) mit dem Zwischenstrom zu versorgen;
wobei das zweite Umwandlungsmodul (4) geeignet ist, den Zwischenstrom in einen Ausgangs-Gleichstrom umzuwandeln und die Batterie (5) mit dem Ausgangsstrom zu versorgen;
wobei die Ladevorrichtung (2) ferner umfasst:
- ein Umschaltmodul (7), das geeignet ist, das erste Umwandlungsmodul (3) zwischen einer ersten Konfiguration, die an einen einphasigen Eingangswechselstrom angepasst ist, und einer zweiten Konfiguration, die an einen mehrphasigen Eingangswechselstrom angepasst ist, umzuschalten,
wobei das erste Umwandlungsmodul (3) eine Vielzahl von Umwandlungseinheiten des ersten Moduls (3a, 3b, 3c) umfasst, wobei jede Umwandlungseinheit des ersten Moduls (3a, 3b, 3c) geeignet ist, einen einphasigen Wechselstrom in einen Gleichstrom umzuwandeln und das Umschaltmodul (7) geeignet ist, in der zweiten Konfiguration den mehrphasigen Eingangswechselstrom in einphasige Wechselströme zu trennen und die Umwandlungseinheiten des ersten Moduls (3a, 3b, 3c) mit diesen jeweiligen einphasigen Wechselströmen zu versorgen.

2. Vorrichtung nach Anspruch 1, wobei der mehrphasige Wechselstrom ein Dreiphasen-Wechselstrom ist.

3. Vorrichtung nach Anspruch 1 oder 2, umfassend Steuermittel (8), die geeignet sind, die einphasige oder mehrphasige Natur des Eingangswechselstroms zu ermitteln und die Umschaltvorrichtung (7) zu steuern.

4. Vorrichtung nach Anspruch 3, wobei die Steuermittel (8) geeignet sind:
- einen oder mehrere Parameter des Eingangswechselstroms zu ermitteln, die vorzugsweise aus einem Spannungswert, einem Stärkewert, einem Leistungswert, einem Frequenzwert und einer Kombination derselben ausgewählt sind; und/oder
- eine oder mehrere Informationen von außen zu empfangen, die vorzugsweise aus einem Funksignal, einem Trägerstromsignal, einem von einer speziellen leitenden Leitung empfangenen elektrischen Signal und einer Kombination derselben ausgewählt sind; und
- einen oder mehrere Betriebsparameter des ersten Umwandlungsmoduls (3), die vorzugsweise aus einem maximalen Stärkewert des Zwischenstroms und einem maximalen Spannungswert des Zwischenstroms ausgewählt sind, in Abhängigkeit von den ermittelten Parametern des Eingangswechselstrom und/oder den von außen empfangenen Informationen einzustellen.

5. Vorrichtung nach einem der Ansprüche 1 bis 4, umfassend zusätzliche Steuermittel (6) des ersten Umwandlungsmoduls (3), die geeignet sind, die Spannung des Zwischenstroms in Abhängigkeit von Betriebsparametern des zweiten Umwandlungsmoduls (4) einzustellen, die vorzugsweise aus der Spannung und/oder der Leistung und/oder der Stärke des Ausgangsstroms ausgewählt sind.

6. Vorrichtung nach einem der Ansprüche 1 bis 5, wobei das erste Umwandlungsmodul (3) mindestens einen Leistungsfaktor-Korrekturkreis aufweist.

7. Vorrichtung nach einem der Ansprüche 1 bis 6, wobei jede der Umwandlungseinheiten des ersten Moduls (3a, 3b, 3c) geeignet ist, einen individuellen Zwischenstrom bereitzustellen, und wobei:
- Summiermittel geeignet sind, die individuellen Zwischenströme zu summieren, um einen Gesamt-Zwischenstrom bereitzustellen, der das zweite Umwandlungsmodul (4) versorgt; oder
- das zweite Umwandlungsmodul (4) Umwandlungseinheiten des zweiten Moduls (4a, 4b, 4c) umfasst, wobei jede von einem individuellen Zwischenstrom versorgt wird, der von einer der jeweiligen Umwandlungseinheiten des ersten Moduls (3a, 3b, 3c) ausgeht.

8. Vorrichtung nach einem der Ansprüche 1 bis 7, die geeignet ist, auf einem motorisierten Apparat angebracht zu sein; oder geeignet, an einen motorisierten Apparat außerhalb desselben angeschlossen zu sein, wobei der motorisierte Apparat ein Fahrzeug, vorzugsweise ein Kraftfahrzeug mit elektrischer Versorgung ist.

9. Verfahren zum Laden einer Batterie eines motorisierten Apparats, umfassend:
- das Bereitstellen eines einphasigen oder mehrphasigen Eingangswechselstroms;
- das Umschalten eines ersten Umwandlungsmoduls in eine erste Konfiguration, die für einen einphasigen Wechselstrom geeignet ist, oder in eine zweite Konfiguration, die für einen mehrphasigen Wechselstrom geeignet ist;
- das Umwandeln des Eingangswechselstroms in mindestens einen Zwischen-Gleichstrom im ersten Umwandlungsmodul;
- das Umwandeln des Zwischenstroms in einen Ausgangs-Gleichstrom in einem zweiten Umwandlungsmodul;
- das Versorgen der Batterie durch den Ausgangsstrom;
wobei, wenn das erste Umwandlungsmodul in der zweiten Konfiguration ist, der mehrphasige Eingangswechselstrom in einphasige Wechselströme getrennt wird und jeder einphasige Wechselstrom in einen individuellen Zwischen-Gleichstrom umgewandelt wird.

10. Verfahren nach Anspruch 9, wobei der mehrphasige Wechselstrom ein Dreiphasen-Wechselstrom ist, und/oder der motorisierte Apparat ein Fahrzeug, vorzugsweise ein Kraftfahrzeug mit elektrischer Versorgung ist.

11. Verfahren nach Anspruch 9 oder 10, umfassend das Ermitteln der einphasigen oder mehrphasigen Natur des Eingangswechselstroms und wobei das Umschalten des ersten Umwandlungsmoduls in Abhängigkeit von der ermittelten Natur des Eingangswechselstroms durchgeführt wird.

12. Verfahren nach einem der Ansprüche 9 bis 11, umfassend:
- das Ermitteln von einem oder mehreren Parametern des Eingangswechselstroms, die vorzugsweise aus einem Spannungswert, einem Stärkewert, einem Leistungswert, einem Frequenzwert und einer Kombination derselben ausgewählt sind; und/oder
- das Empfangen von einer oder mehreren Informationen von außen, die vorzugsweise aus einem elektromagnetischen Strahlungssignal, einem Trägerstromsignal, einem von einer speziellen leitenden Leitung empfangenen elektrischen Signal und einer Kombination derselben ausgewählt sind; und
- das Einstellen von einem oder mehreren Betriebsparametern der Umwandlung des Eingangswechselstroms in Zwischenstrom, die vorzugsweise aus einem maximalen Stärkewert des Zwischenstroms und einem maximalen Spannungswert des Zwischenstroms ausgewählt sind, in Abhängigkeit von den ermittelten Parametern des Eingangswechselstrom und/oder den von außen empfangenen Informationen.

13. Verfahren nach einem der Ansprüche 9 bis 12, umfassend das Einstellen der Spannung des Zwischenstroms in Abhängigkeit von Parametern des Ausgangsstroms, die vorzugsweise aus der Spannung und/oder der Leistung und/oder der Stärke des Ausgangsstroms ausgewählt sind.

14. Verfahren nach einem der Ansprüche 9 bis 13, wobei die individuellen Zwischenströme zu einem Gesamt-Zwischenstrom addiert werden, wobei der Gesamt-Zwischenstrom in den Ausgangsstrom umgewandelt wird; oder jeder individuelle Zwischenstrom in einen individuellen Ausgangs-Gleichstrom umgewandelt wird, wobei die individuellen Ausgangströme zu einem Gesamt-Ausgangsstrom addiert werden.

15. Motorisierter Apparat, umfassend die Ladevorrichtung (2) nach einem der Ansprüche 1 bis 8 sowie die Batterie (5), wobei der motorisierte Apparat vorzugsweise ein Fahrzeug und vorzugsweiser ein Kraftfahrzeug mit elektrischer Versorgung ist.

## Claims

1. Charging device (2) for a battery (5) of a motor-driven machine adapted to be powered by a single-phase input alternating current and adapted to be powered by a multi-phase input alternating current, said charging device (2) comprising:
- a first conversion module (3);
- a second conversion module (4);
the first conversion module (3) being adapted to convert an alternating current into at least one direct intermediate current and to supply the second conversion module (4) with said intermediate current;
the second conversion module (4) being adapted to convert the intermediate current into a direct output current, and to supply the battery (5) with said output current; the charging device (2) further comprising:
- a switching module (7) which is adapted to switch the first conversion module (3) between a first configuration which is adapted to a single-phase input alternating current and a second configuration which is adapted to a multi-phase input alternating current;
wherein the first conversion module (3) comprises a plurality of first conversion module units (3a, 3b, 3c), each first conversion module unit (3a, 3b, 3c) being adapted to convert a single-phase alternating current into a direct current, and the switching module (7) being adapted, in the second configuration, to separate the multi-phase input alternating current into single-phase alternating currents and to supply the first conversion module units (3a, 3b, 3c) with these respective single-phase alternating currents.

2. Device according to claim 1, wherein the multi-phase alternating current is a three-phase alternating current.

3. Device according to claim 1 or 2, comprising control means (8) adapted to detect the single-phase or multi-phase nature of the input alternating current, and control the switching device (7).

4. Device according to claim 3, wherein the control means (8) are adapted to:
- detect one or more parameters of the input alternating current, preferably selected from a voltage value, an intensity value, a power value, a frequency value, and a combination thereof; and/or
- receive one or more pieces of external information, preferably selected from a radio signal, a carrier-current signal, an electrical signal received via a dedicated conductive line, and a combination thereof; and
- adjust one or more operating parameters of the first conversion module (3), preferably selected from a maximum intensity value of the intermediate current and a maximum voltage value of the intermediate current, based on the detected parameters of the input alternating current and/or the external information received.

5. Device according to one of claims 1 to 4, comprising additional control means (6) of the first conversion module (3) which are adapted to adjust the voltage of the intermediate current based on operating parameters of the second conversion module (4), preferably selected from the voltage and/or the power and/or the intensity of the output current.

6. Device according to one of claims 1 to 5, wherein the first conversion module (3) comprises at least one power factor correction circuit.

7. Device according to one of claims 1 to 6, wherein each of the first conversion module units (3a, 3b, 3c) is adapted to supply an individual intermediate current, and wherein:
- summation means are adapted to sum the individual intermediate currents to supply a total intermediate current powering the second conversion module (4); or
- the second conversion module (4) comprises second module conversion units (4a, 4b, 4c), each of which is powered by an individual intermediate current from one of the respective first module conversion units (3a, 3b, 3c).

8. Device according to one of claims 1 to 7, which is adapted to be mounted on the motor-driven machine; or which is adapted to be connected to the motor-driven machine on the outside thereof; the motor-driven machine being preferably a vehicle, and more particularly a motor vehicle powered by electricity.

9. Method for charging a battery of a motor-driven machine, comprising:
- supplying a single-phase or multi-phase input alternating current;
- switching a first conversion module into a first configuration which is adapted to a single-phase alternating current and a second configuration which is adapted to a multi-phase alternating current;
- converting the input alternating current into at least one direct intermediate current, in the first conversion module;
- converting the intermediate current into a direct output current in the second conversion module;
- powering the battery with the output current;
wherein, when the first conversion module is in the second configuration, the multi-phase input alternating current is separated into single-phase alternating currents, and each single-phase alternating current is converted into a direct individual intermediate current

10. Method according to claim 9, wherein the multi-phase alternating current is a three-phase alternating current; and/or the motor-driven machine is a vehicle, preferably a motor vehicle powered by electricity.

11. Method according to claim 9 or 10, comprising detecting the single-phase or multi-phase nature of the input alternating current, the switching of the first conversion module being carried out based on the detected nature of the input alternating current.

12. Method according to one of claims 9 to 11, comprising:
- detecting one or more parameters of the input alternating current, preferably selected from a voltage value, an intensity value, a power value, a frequency value, and a combination thereof; and/or
- receiving one or more pieces of external information, preferably selected from an electromagnetic radiation signal, a carrier-current signal, an electrical signal received via a dedicated conductive line, and a combination thereof; and
- adjusting one or more parameters of the conversion of the input alternating current into intermediate current, preferably selected from a maximum intensity value of the intermediate current and a maximum voltage value of the intermediate current, based on the detected parameters of the input alternating current and/or the external information received.

13. Method according to one of claims 9 to 12, comprising adjusting the voltage of the intermediate current based on parameters of the output current, preferably selected from the voltage and/or the power and/or the intensity of the output current.

14. Method according to one of claims 9 to 13, wherein the individual intermediate currents are added together to form a total intermediate current, the total intermediate current being converted into the output current; or wherein each individual intermediate current is converted into a direct individual output current, the individual output currents being added together to form a total output current.

15. Motor-driven machine comprising the charging device (2) according to one of claims 1 to 8, as well as the battery (5), the motor-driven machine preferably being a vehicle, and more particularly preferably a motor vehicle powered by electricity.
